# EUROPEAN PATENT SPECIFICATION

(11) **EP 2 735 418 B1**
(45) Date of publication and mention of the grant of the patent: **08.05.2019**
(21) Application number: 13192124.9
(22) Date of filing: 08.11.2013
(51) Int. Cl.: B29C 45/18

(54) **INJECTION MOLDING MACHINE AND RAW MATERIAL METERING UNIT**
SPRITZGIESSMASCHINE UND ROHSTOFF-DOSIEREINHEIT
MACHINE DE MOULAGE PAR INJECTION ET UNITÉ DE DOSAGE DE MATIÈRE BRUTE

(30) Priority: 22.11.2012 JP 2012256230
(43) Date of publication of application: 28.05.2014
(73) Proprietor: SUMITOMO HEAVY INDUSTRIES, LTD., Tokyo 141-6025 (JP)
(72) Inventor: Tokuno, Ryuichi, Chiba, 263-0001 (JP); Inada, Yuichi, Chiba, 263-0001 (JP)
(74) Representative: Hoffmann Eitle

(56) References cited:
- JP-A- H0 577 241
- JP-A- 2002 210 779
- JP-A- 2007 125 818
- JP-B2- 2 856 885
- US-A- 3 892 390
- US-A- 4 511 319
- US-A1- 2005 194 705

## Description

### BACKGROUND

### 1. Technical Field

The present invention relates to an injection molding machine, an injection molding system, and a raw material metering unit.

### 2. Description of Related Art

Injection molding machines manufacture molding products by filling a liquid molding material into a mold and solidifying the molding material (See, e.g., Japanese Unexamined Patent Publication No. 2009-101529). The molding material that is filled into the mold is fabricated by metering plural types of raw materials.

Conventionally, when molding material fabrication conditions (e.g., the types of raw materials used, or the mix ratio of the raw materials) are altered, the molding material that has already been fabricated will be wasted.

A further document is US 3,892,390 A1 referring to a method and means for putting additive in plastic and other materials. The method of homogeneously mixing an additive with a granular material during the screw extrusion thereof comprises: by means of an auger feed tube having a hooded terminus metering the additive material horizontally into the feed hopper of the screw extruder above and adjacent the screw and delivering the additive from the hooded terminus of the tube at a point within about one-twelfth of the diameter distance from the vertical axis of the hopper, said diameter being of the hopper section at the auger feed tube level, and controlling the auger and the screw with a common switch, whereby the operations thereof are coordinated.

JP H05 77241 A refers to a device for supplying molding raw material having storage tanks respectively receiving raw material particles, coloring particles and recycle material ground particles, and supply devices sending out the particles in the storage tanks in the amounts corresponding to a molding amount.

US 2005-194705 A1 shows a plastic forming process monitoring and control. Initially, information about raw materials are acquired, then operation of the equipment is monitored and containers produced by the equipment are inspected for anomalies that affect acceptability of said containers. Based on information obtained in these steps, at least one controllable action is automatically controlled to eliminate said anomalies, and acceptability of containers produced by the equipment is certified.

Another document is JP 2002-210779 A referring to an injection molding machine having recycled material recovering mechanism. A conveyance pipe receives the recycled material removed by a removing machine conveys it. The conveyance finish end of the pipe is connected to the raw material supply port of an injection apparatus.

A yet further document is JP 2 856885 B2.

### SUMMARY

The present invention has been conceived in view of the above problems of the related art, and its object is to provide an injection molding machine that is capable of reducing the waste of molding material.

According to the present invention, an injection molding machine includes the features of independent claim 1. Further embodiments are mentioned in the dependent claims.

### BRIEF DESCRIPTION OF THE DRAWINGS

FIG. 1 illustrates a configuration of an injection molding system according to an embodiment of the present invention; and
FIG. 2 illustrates a configuration of an injection molding machine according to an embodiment of the present invention.

### DETAILED DESCRIPTION

In the following, embodiments of the present invention are described with reference to the accompanying drawings. Note that identical or corresponding features shown in the two drawings are given the same reference numerals and their descriptions may be omitted. Also, in the following descriptions, it is assumed that an ejecting direction of a molding material ejected from a cylinder corresponds to a forward (front) direction, and the direction opposite the ejecting direction corresponds a backward (rear) direction.

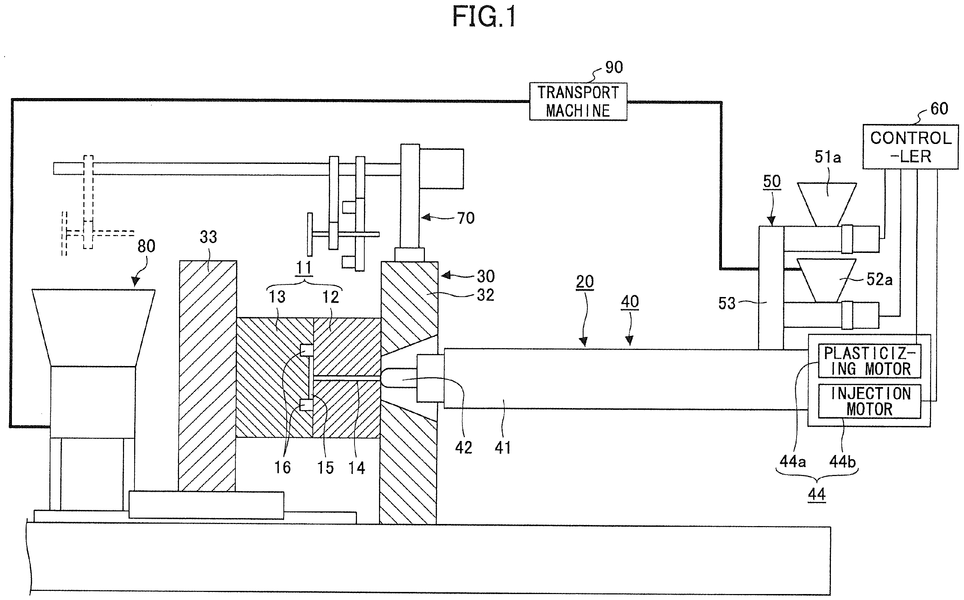

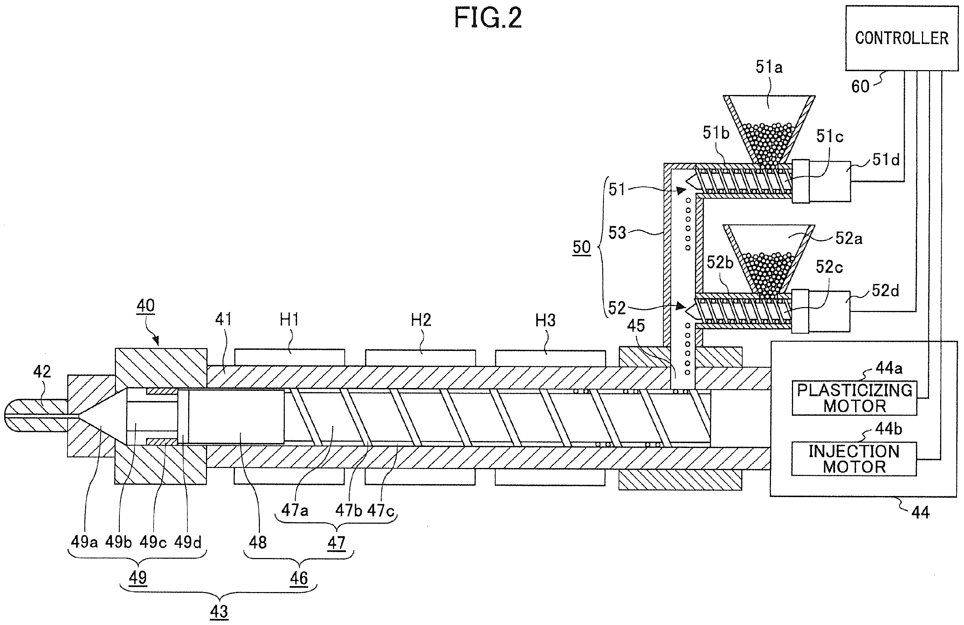

FIG. 1 illustrates a configuration of an injection molding system according to an embodiment of the present invention. In FIG. 1, a bold line represents a transport line of a transport machine 90. Also, a broken line in FIG. 1 represents the state of a take-out robot 70 when the take-out robot 70 inputs unwanted scrap included in the molding products ejected from an injection molding machine 20 into a grinder 80. FIG. 2 illustrates a configuration of the injection molding machine 20 according to an embodiment of the present invention.

The injection molding system illustrated in FIG. 1 includes the injection molding machine 20 that fabricates a molding product, the take-out robot 70 that removes the molding product from the injection molding machine 20, the grinder 80 that fabricates recycled material by grinding unwanted scrap other than a manufactured molding product, and a transport machine 90 that sends the recycled material fabricated at the grinder 80 to the injection molding machine 20. The take-out robot 70 separates a manufactured molding product from unwanted scrap upon removing the molding products from the injection molding machine 20 and passes the unwanted scrap to the grinder 80. Note that the take-out robot 70, the grinder 80, and the transport machine 90 used in the present embodiment may be those generally used in injection molding machines.

The injection molding machine 20 includes a mold unit 11; a mold clamping unit 30 that performs mold closing, mold clamping, and mold opening operations on the mold unit 11; an injection unit 40 that fills a molding material into the mold unit 11; and a raw material metering unit 50 that meters plural types of raw materials that make up the molding material.

The mold clamping unit 30 includes a stationary platen 32 to which a stationary mold 12 is attached and a movable platen 33 to which a movable mold 13 is attached. The mold clamping unit 30 performs molding closing, mold clamping, and mold opening operations by moving the movable platen 33 back and forth with respect to the stationary platen 32 so that the movable mold 13 may move toward or away from the stationary mold 12. The stationary mold 12 and the movable mold 13 form the mold unit 11. The mold opening/closing direction may be oriented horizontally, for example. The mold unit 30 may be driven by any drive system such as a toggle system that uses an electric motor and a toggle mechanism, or an electromagnetic system that uses a linear motor and an electromagnet, for example.

The injection unit 40 fills a molding material (e.g., resin) that is in liquid state into the mold unit 11. The molding material injected from the injection unit 40 passes through mold flow paths such as a sprue 14 and a runner 15 to flow into a cavity 16. Then, the molding material within the cavity 16 is solidified to become a manufactured molding product. On the other hand, the molding material that is solidified at the mold flow paths does not become a manufactured molding product but turns into unwanted scrap. Note that the molding material solidified at the mold unit 11 including the manufactured molding product and the unwanted scrap are collectively referred to as "molding products" hereinafter.

Referring to FIG. 2, the injection unit 40 includes a cylinder 41 that heats the molding material, an injection nozzle 42 that is arranged at the front end of the cylinder 41, a screw 43 that is arranged to be rotatable and movable back and forth within the cylinder 41, and a drive device 44 that is arranged at the rear side of the cylinder 44. The drive device 44 includes a plasticizing motor 44a that rotates the screw 43 and an injection motor 44b that moves the screw 43 back and forth.

The cylinder 41 heats and melts the molding material. The cylinder 41 has heaters H1-H3 arranged at its outer periphery as heat sources. The cylinder also has a molding material supply port 45 formed at its rear side.

The screw 43 includes a screw body 46 and an injection part 49 that is arranged at the front side of the screw body 46.

The screw body 46 includes a flight part 47 and a pressure member 48 that is detachably arranged at a front end portion of the flight part 47. The flight part 47 includes a rod-shaped main body 47a and a spiral flight 47b protruding from the outer peripheral face of the main body 47a. A spiral groove 47c is formed along the spiral flight 47b. The depth of the spiral groove 47c may be substantially uniform from the rear end of the flight 47 to the front end of the flight 47, and the screw compression ratio may be substantially uniform, for example.

Note that in certain embodiments, the pressure member 48 may be omitted and the flight part 47 may be arranged to extend throughout the entire length of the screw body 46, for example. Further, the screw body 46 may be divided into a supply part, a compression part, and a metering part from the rear side to the front side, the supply part being where the molding material (e.g., resin) is supplied and transported, the compression part being where the supplied molding material is compressed and melted, and the metering part being where the molten molding material is metered at predetermined amounts. In this case, the depth of the spiral groove 47c formed at the screw body 46 may be arranged to be relatively deep at the supply part, relatively shallow at the metering part, and increasingly shallower toward the front side at the compression part.

The injection part 49 includes a head part 49a having a conical portion arranged at its front end, a rod part 49b arranged adjacent to the rear end of the heat part 49a, a check ring 49c arranged around the rod part 49b, and a seal ring 49d attached to the front end of the pressure member 48.

When the screw 43 moves backward, the check ring 49c moves forward toward the rod part 49b. When the check ring 49c is separated from the seal ring 49c, the molding material flows toward the front side of the screw 43. On the other hand, when the screw 43 moves forward, the check ring 49c moves backward away from the rod part 49b, and when the seal ring 49d comes into contact with the seal ring 49d, reverse flow of the molding material is prevented.

The raw material metering unit 50 meters plural types of raw materials that make up the molding material to be filled into the mold unit 11. As illustrated in FIG. 2, the raw material metering unit 50 includes a first raw material metering part 51 that meters a first raw material corresponding to a virgin material, a second raw material metering part 52 that meters a second raw material corresponding to recycled material, and a merging part 53 where the virgin material metered at the first raw material metering part 51 and the recycled material metered at the second raw material metering part 52 merge. Unlike the recycled material, the virgin material corresponds to material that has never been filled into the mold unit 11. The virgin material may be fabricated by a pelletizer, for example.

The first raw material metering part 51 includes a raw material metering hopper 51a that accommodates the virgin material, a raw material metering cylinder 51b that extends horizontally from the bottom end of the raw material metering hopper 51a, a raw material metering screw 51c that is rotatably arranged within the raw material metering cylinder 51b, and a raw material metering motor 51d that rotates the raw material metering screw 51c. When the raw material metering motor 51d is driven to rotate the raw material metering screw 51c, the virgin material moves forward along a spiral groove formed around the raw material metering screw 51c to be supplied to the merging part 53, which is a cylindrical structure connected to the raw material metering cylinder 51b. The supply rate of the virgin material may be determined primarily based on the rotation speed of the raw material metering screw 51c. The first raw material metering part 51 meters the virgin material by rotating the raw material metering screw 51c at a predetermined rotation speed for a predetermined time period.

The second raw material metering part 52 includes a raw material metering hopper 52a that accommodates the recycled material, a raw material metering cylinder 52b that extends horizontally from the bottom end of the raw material metering hopper 52a, a raw material metering screw 52c that is rotatably arranged within the raw material metering cylinder 52b, and a raw material metering motor 52d that rotates the raw material metering screw 52c. When the raw material metering motor 52d is driven to rotate the raw material metering screw 52c, the recycled material moves forward along a spiral groove formed around the raw material metering screw 52c to be supplied to the merging part 53. The supply rate of the recycled material may be determined primarily based on the rotation speed of the raw material metering screw 52c. The second raw material metering part 52 meters the recycled material by rotating the raw material metering screw 52c at a predetermined rotation speed for a predetermined time period.

Note that the raw material metering cylinders 51b and 52b do not necessarily have to extend in the horizontal direction, but may alternatively extend diagonally, with the material outlet side being positioned higher than the material inlet side, for example. Also, in certain embodiments, the raw material metering cylinders 51b and 52b may be configured to preheat the raw materials to suitable temperatures that would not cause melting of the raw materials. In such case, the raw material metering cylinders 51b and 52b may have heaters arranged at their outer peripheries as preheating sources, for example.

The merging part 53 may be arranged above the molding material supply port 45 of the cylinder 41, for example. The first raw material metering part 51 and the second raw material metering part 52 are connected to the merging part 53. The virgin material metered at the first raw material metering part 51 and the recycled material metered at the second raw material metering part 52 merge as they fall through the merging part 53 to become the molding material. The molding material that is fabricated in this manner falls toward the molding material supply port 45 to be supplied to the cylinder 41 without remaining at the merging part 53. In certain embodiments, a stirring machine that stirs the virgin material and the recycled material may be arranged within the merging part 53.

Note that the raw material metering unit 50 may be configured to meter various types of raw materials. For example, the raw material metering unit 50 may be configured to meter a raw material including resin pellets as a main material and an add-in material. Examples of an add-in material include a colorant, a blowing agent, a lubricant, an antioxidant, and a stiffener. The stiffener may be made of glass fiber or carbon fiber, for example. Also, in certain embodiments, the raw material metering unit 50 may be configured to meter three or more types of raw materials and may include three or more raw material metering parts.

In the following, operations of the injection molding machine 20 are described. Operations of the injection molding machine 20 are controlled by a controller 60. The controller 60 may include a CPU, a ROM, a RAM, a storage unit such as a hard disk, an input interface, an output interface, a timer, and a counter, for example. The controller 60 may implement various functions of the injection molding machine 20 by having the CPU execute a program stored in the ROM or the storage unit, for example.

During one cycle, the injection molding machine 20 performs a mold closing process for closing the mold unit 11, a mold clamping process for clamping the mold unit 11, a filling process for filling the mold unit 11 with liquid molding material, a hold pressure process for pressurizing the molding material being filled into the mold unit 11, a cooling process for solidifying the molding material within the mold unit 11, a plasticizing process for plasticizing the molding material to be used for manufacturing the next molding product, a mold opening process for opening the mold unit 11, and an ejection process for ejecting the molding product from the opened mold unit 11. By repeatedly performing the above sequence of processes, the injection molding machine 20 may successively manufacture multiple molding products. The filling process and the hold pressure process are performed during the mold clamping process. Also, in certain embodiments, the plasticizing process may be performed during the cooling process in order to reduce the duration of one molding cycle.

In the plasticizing process, the plasticizing motor 44a is driven to rotate the screw 43 at a predetermined rotation speed. As a result, the molding material moves forward along the spiral groove 47c formed around the flight 47. Then, the molding material passes through a molding material flow path between the cylinder 41 and the pressure member 48. After being kneaded at the flow path between the cylinder 41 and the pressure member 48, the molding material passes through a flow path between the cylinder 41 and the rod part 49b to move forward toward the front side of the screw 43. The molding material is thus accumulated at the front part of the cylinder 41. While the molding material is moved forward, the molding material is heated by the heaters H1-H3 to be melted. Also, the molding material is gradually pressurized as it moves from a molding material pressure raising start position of the screw body 46 toward the front end of the screw body 46. As the molding material accumulates in front of the screw 43, the screw 43 recedes toward the rear side.

Also, in the plasticizing process, the injection motor 44b is driven to apply back pressure to the screw 43 in order to prevent the screw 43 from abruptly receding backward. In this way, kneading performance of the molding material may be improved and gas within the molding material may escape more easily toward the rear side, for example. An electric current is supplied to the injection motor 44b so that the back pressure applied to the screw 43 may be controlled to a predetermined pressure.

While the screw 43 recedes backward, the controller 60 monitors the position of the screw 43 with a position sensor (not shown). When the screw 43 recedes backward to reach a plasticizing complete position and a predetermined amount of molding material is accumulated in front of the screw 43, drive operations of the plasticizing motor 44a are stopped so that the rotation of the screw 43 is stopped. In this way, the plasticizing process may be completed.

In the filling process, the injection motor 44b is driven to move the screw 43 forward so that the molding material in the liquid state may be filled into the mold unit 11 while the mold unit 11 is in the clamped state. Because the liquid molding material that is filled into the mold unit 11 contracts (shrinks) when it is cooled, the molding material is replenished during the hold pressure process to make up for the loss in volume of the molding material. An electric current is applied to the injection motor 44b during the hold pressure process so that the molding material may be filled into the mold unit 11 at a predetermined filling pressure.

In the present embodiment, the controller 60 monitors the operation status of the injection unit 40 and activates the raw material metering unit 50 based on the monitoring results of monitoring the injection unit 40. In this way, the amount of the molding material stocked at the injection unit 40 may be reduced to a minimum so as to avoid a waste of the molding material that may result from a change in the fabrication condition of the molding material, for example.

The operation status of the injection unit 40 may be detected by various sensors that are connected to the controller 60, for example. In one embodiment, a position sensor that detects the position of the movable mold 13, a position sensor that detects the position of the screw 43, and a sensor that is used for sequence control of the injection molding machine 20 may be used to detect the operation status of the injection unit 40. In another embodiment, a door sensor that detects the opening/closing of a door of the injection molding machine 20 and a sensor that detects an abnormality of the injection molding machine 20 may be used to detect the operation status of the injection unit 40. When the door of the injection molding machine 20 is open or when an abnormality of the injection molding machine 20 is detected, injection molding operations are forced to stop and operations of the injection unit 40 are stopped as a result.

While operations of the injection unit 40 are stopped, molding products are not newly manufactured and the recycled material is not newly produced.

Accordingly, when the controller 60 detects that the injection molding operations have been stopped and the operations of the injection unit 40 have been stopped, the controller 60 prohibits activation of the raw material metering unit 50 that meters the virgin material and recycled material. That is, while the recycled material is not newly produced, metering of the recycled material is stopped. In this way, the amount of recycled material accommodated within the raw material metering hopper 52a may be maintained within a predetermined range, and the density of the recycled material within the raw material metering cylinder 52b may be maintained within a predetermined range. Thus, the supply rate at which the recycled material is supplied to the merging part 53 may be stabilized, the mix ratio of the recycled material contained in the molding material may be stabilized, and the quality of the resulting molding products may be stabilized. When the controller 60 detects that injection molding operations have been restarted and operations of the injection unit 40 have resumed, the controller 60 allows activation of the raw material metering unit 50.

Also, the controller 60 may start operations of the raw material metering unit 50 during the plasticizing process, for example. The molding material that is supplied to the cylinder 41 from the raw material metering unit 50 is immediately transported forward without remaining at the molding material supply port 45. Thus, the molding material may not be densely filled within the spiral groove 47c formed around the flight part 47. That is, the molding material within the spiral groove 47c may be maintained in a non-dense state (starvation state). In this way, generation of shear heat that may occur when the molding material moves forward along the spiral groove 47c may be reduced, and temperature control of the molding material within the cylinder 41 to a desired temperature may be facilitated.

For example, during the plasticizing process, the controller 60 may control the raw material metering screws 51c and 52c to rotate at predetermined rotation speeds. The rotation speeds of the raw material metering screws 51c and 52c may be set up so that the mix ratio of the first and second raw materials may be at a predetermine value, for example.

As the rotation speeds of the raw material metering screws 51c and 52 are increased, the supply rate at which the molding material is supplied into the spiral groove 47c formed around the screw 43 is accelerated. Also, as the rotation speed of the screw 43 is increased, the forward moving speed of the molding material within the spiral groove 47c formed around the screw 43 is accelerated. Accordingly, the density of the molding material within the spiral groove 47c formed around the screw 43 varies depending on the ratio of the rotation speed of the screw 43 to the rotation speeds of the raw material metering screws 51c and 52c. When the density of the molding material within the spiral groove 47c changes, the molding material pressure raising start position within the spiral groove 47c changes accordingly. By arranging the molding material pressure raising start position at the rear side of the pressure member 48 within a predetermined distance from the pressure member 48, the molten state of the molding material may be stabilized and the weight of the molding product may be stabilized.

Thus, the controller 60 sets up the rotation speeds of the raw material metering screws 51c and 52c based on the rotation speed of the screw 43 in order to stabilize the weight of the molding product. For example, the controller 60 may set up the rotation speeds of the raw material metering screws 51c and 52c such that their ratios with respect to the rotation speed of the screw 43 are at predetermined values.

Also, the controller 60 may control the raw material metering screws 51c and 52c to rotate in synch with the screw 43. That is, the controller 60 may start rotation of the raw material metering screws 51c and 52c at the time rotation of the screw 43 is started, and the controller 60 may end the rotation of the raw material metering screw 51c and 52c at the time the rotation of the screw 43 is ended. In this way, one shot of molding material may be fabricated for every cycle so that a waste of the molding material may be avoided. In the present embodiment, the molding material is supplied to the cylinder 41 immediately after its fabrication at the raw material metering unit 50 to avoid a waste of the molding material.

Note that the rotation of the screw 43 and the rotation of the raw material metering screws 51c and 52c do not have to take place exactly at the same time as long as they are performed substantially at the same time. For example, the rotation of the raw material metering screws 51c and 52c may be started slightly earlier than the rotation start time of the screw 43. Such an accommodation may be made in consideration of the slight time difference between the rotation start time of the raw material metering screws 51c and 52c and the time the molding material starts being supplied to the cylinder 41. Similarly, the rotation of the raw material metering screws 51c and 52c may be ended slightly earlier than the rotation end time of the screw 43.

Also, the rotation of the raw material metering screw 51c and the rotation of the raw material metering screw 52c do not have to take place exactly at the same time as long as they are performed substantially at the same time. For example, in the case where the first raw material metering part 51 and the second raw material metering part 52 are arranged one above the other as illustrated in FIG. 2, the rotation of the upper side raw material metering screw 51c may be started slightly earlier than the rotation of the lower side raw material metering screw 52c. Such an accommodation may be made in consideration of the slight delay in time before the virgin material supplied to the merging part 53 from the upper side raw material metering cylinder 51b may reach the same height position as the lower side raw material metering cylinder 52b. Similarly, the rotation of the upper side raw material metering screw 51c may be ended slightly earlier than the rotation end time of the lower side raw material metering screw 52c.

Although the present invention has been described above in connection with certain illustrative embodiments, the present invention is not limited to these embodiments, and numerous variations and modifications may be made without departing from the scope of the present invention.

For example, although the injection molding machine 20 illustrated above corresponds to a horizontal type injection molding machine with the mold opening/closing direction oriented horizontally, the present invention may also be applied to a vertical type injection molding machine with the mold opening/closing direction oriented vertically, for example.

Also, although the injection unit 40 illustrated above corresponds to a screw in-line type injection unit, the present invention may also be applied to a screw pre-plasticizing type injection unit, for example. The screw pre-plasticizing type injection unit supplies molding material that is melted at a plasticizing cylinder to an injection cylinder and injects the molten molding material from the injection cylinder into a mold unit. In the screw pre-plasticizing type injection unit, a screw is arranged within the plasticizing cylinder.

Also, although the raw material metering unit 50 illustrated above is a part of the injection molding machine 20, the raw material metering unit 50 may alternatively be an external device that is separate from the injection molding machine 20. In this case, the raw material metering unit 50 may have a separate controller, and the controller of the raw material metering unit 50 may obtain information on the operation status of the injection unit 40 from the controller 60 of the injection molding machine 20, for example.

Also, although the raw material metering unit 50 illustrated above is configured to fabricate the molding material one shot at a time for every cycle, the present invention is not limited to such an example. In other embodiments, the raw material metering unit 50 may be configured to fabricate multiple shots of the molding material for multiple cycles.

Also, although the raw material metering unit 50 illustrated above is configured to immediately supply the molding material to the cylinder 41 once the molding material is fabricated, the present invention is not limited to such an example. In an alternative embodiment, the molding material fabricated at the raw material metering unit 50 may be temporarily stored in a tank, and the molding material may be transported from this tank to the cylinder 41 using a transport machine, for example.

Also, although the raw material metering unit 50 illustrated above causes the plural types of raw materials metered at their respective raw material metering parts to merge at the merging part 53, the present invention is not limited to such an example. In an alternative embodiment, the plural types of raw materials may be supplied to the cylinder 41 without being merged. In this case, the plural types of raw materials may be mixed within the cylinder 41 by the rotation of the screw 43.

Also, although the rotation speed of the screw 43 and the rotation speeds of the raw material metering screws 51c and 52c are arranged to be constant in the plasticizing process described above, the rotation speeds may alternatively be arranged to vary depending on the time elapsed from the start of the plasticizing process or the position of the screw 43, for example.

Also, although the mold unit 11 illustrated above corresponds to a cold runner mold unit in which the molding material solidifies at the mold flow paths such as the runner 15, the present invention may also use a hot runner mold unit in which the mold flow paths are heated so that the mold material does not solidify. In the hot runner mold unit, unwanted scrap other than the manufactured molding product may not be generated.

Also, although the grinder 80 illustrated above is configured to fabricate the recycled material by grinding the molding material solidified at the mold flow paths (unwanted scrap) included in the molding products formed by the mold unit 11, the grinder 80 may also be configured to fabricate the recycled material by grinding defective molding products, for example.

Also, the arrangement of the take-out robot 70 and the grinder 80 is not limited to the arrangement illustrated in FIG. 1. Although the take-out robot 70 and the grinder 80 are arranged along the mold opening/closing direction in FIG. 1, the take-out robot 70 and the grinder 80 may alternatively be arranged in a direction perpendicular to the mold opening/closing direction (direction perpendicular to the cross-sectional plane of FIG. 1), for example.

## Claims

1. A raw material metering unit (50) that meters a plurality of types of raw materials that make up a molding material to be filled into a mold, the raw material metering unit comprising:
a plurality of raw material metering parts (51, 52) that are configured to separately meter the plurality of types of raw materials; and
a controller (60) that controls the plurality of raw material metering parts (51, 52);
wherein the controller (60) monitors an operation status of an injection unit (40), which fills the molding material into the mold, and activates the plurality of raw material metering parts (51, 52) based on a monitoring result of monitoring the injection unit (40),
wherein each of the plurality of raw material metering parts (51, 52) includes a raw material metering cylinder
(51b, 52b) that receives a raw material and a raw material metering screw (51c, 52c) that is rotatably arranged within the raw material metering cylinder (51b, 52b), and
**characterized in that** the controller (60) sets a rotation speed of each of the raw material metering screws (51c, 52c) based on a rotation speed of the screw (43) of the injection unit (40).

2. An injection molding machine (20), comprising:
an injection unit (40) that fills a molding material into a mold (11); and
a raw material metering unit (50) according to claim 1,
wherein
the injection unit (40) includes a cylinder (41) that heats the molding material and a screw (43) that is arranged to be rotatable and movable back and forth within the cylinder (41).

3. The injection molding machine (20) as claimed in claim 2, wherein
the raw material metering unit (50) includes a merging part (53) where the plurality of types of raw materials metered by the plurality of raw material metering parts (51, 52) merge.

4. The injection molding machine as claimed in claim 3, wherein
the merging part (53) is arranged above a molding material supply port (45) that is formed at the cylinder (51) of the injection unit.

5. An injection molding system, comprising:
the injection molding machine (20) as claimed in any one of claims 2-4; and
a grinder (80) that grinds unwanted scrap included in a molding product formed at the mold;
wherein the raw material metering unit (50) is configured to meter a virgin material and a recycled material, which is fabricated by the grinder (80) grinding the unwanted scrap.

## Patentansprüche

1. Rohmaterialdosiereinheit (50), die eine Vielzahl von Arten von Rohmaterialien dosiert, die ein Formmaterial bilden, das in eine Form zu füllen ist, wobei die Rohmaterialdosiereinheit umfasst:
eine Vielzahl von Rohmaterialdosierteilen (51, 52), die gestaltet sind, die Vielzahl von Arten von Rohmaterialien separat zu dosieren; und
eine Steuerung (60), die die Vielzahl von Rohmaterialdosierteilen (51, 52) steuert;
wobei die Steuerung (60) einen Betriebsstatus einer Einspritzeinheit (40) überwacht, die das Formmaterial in die Form füllt, und die Vielzahl von Rohmaterialdosierteilen (51, 52) basierend auf einem Überwachungsergebnis aus der Überwachung der Einspritzeinheit (40) aktiviert,
wobei jeder der Vielzahl von Rohmaterialdosierteilen (51, 52) einen Rohmaterialdosierzylinder (51b, 52b), der ein Rohmaterial aufnimmt, und eine Rohmaterialdosierschnecke (51c, 52c), die drehbar innerhalb des Rohmaterialdosierzylinders (51b, 52b) angeordnet ist, beinhaltet, und
**dadurch gekennzeichnet, dass** die Steuerung (60) eine Drehzahl jeder der Rohmaterialdosierschnecken (51c, 52c) basierend auf einer Drehzahl der Schnecke (43) der Einspritzeinheit (40) einstellt.

2. Spritzgussmaschine (20), umfassend:
eine Einspritzeinheit (40), die ein Formmaterial in eine Form (11) füllt; und
eine Rohmaterialdosiereinheit (50) nach Anspruch 1,
wobei
die Einspritzeinheit (40) einen Zylinder (41), der das Formmaterial erwärmt, und eine Schnecke (43), die angeordnet ist, innerhalb des Zylinders (41) drehbar und vorwärts und rückwärts bewegbar zu sein, beinhaltet.

3. Spritzgussmaschine (20) nach Anspruch 2, wobei
die Rohmaterialdosiereinheit (50) einen Verschmelzteil (53) beinhaltet, wo die Vielzahl von Arten von Rohmaterialien, die durch die Vielzahl von Rohmaterialdosierteilen (51, 52) dosiert werden, verschmolzen werden.

4. Spritzgussmaschine nach Anspruch 3, wobei
der Verschmelzteil (53) über einer Formmaterialzufuhröffnung (45) angeordnet ist, die am Zylinder (51) der Einspritzeinheit gebildet ist.

5. Spritzgusssystem, umfassend:
die Spritzgussmaschine (20) nach einem der Ansprüche 2-4; und
eine Schleifmaschine (80), die unerwünschten Rückstand abschleift, der in einem Formungsprodukt beinhaltet ist, das an der Form gebildet wird;
wobei die Rohmaterialdosiereinheit (50) gestaltet ist, ein frisches Material und ein wiederverwertetes Material, das durch die Schleifmaschine (80) erzeugt wird, die den unerwünschten Rückstand schleift, zu dosieren.

## Revendications

1. Unité de dosage de matières brutes (50) qui dose une pluralité de types de matières brutes qui composent un matériau de moulage à verser dans un moule, l'unité de dosage de matière brute comprenant :
une pluralité de parties de dosage de matière brute (51, 52) qui sont configurées pour doser séparément la pluralité de types de matières brutes ; et
un élément de commande (60) qui commande la pluralité de parties de dosage de matière brute (51, 52) ;
dans laquelle l'élément de commande (60) surveille un état de fonctionnement d'une unité d'injection (40), qui verse le matériau de moulage dans le moule, et active la pluralité de parties de dosage de matière brute (51, 52) sur la base d'un résultat de surveillance de l'unité d'injection (40),
dans lequel chacune de la pluralité de parties de dosage de matière brute (51, 52) inclut un cylindre de dosage de matière brute (51b, 52b) qui reçoit une matière brute et une vis de dosage de matière brute (51c, 52c) qui est agencée de manière à pouvoir tourner dans le cylindre de dosage de matière brute (51b, 52b), et
**caractérisée en ce que** l'élément de commande (60) règle une vitesse de rotation de chacune des vis de dosage de matière brute (51c, 52c) sur la base d'une vitesse de rotation de la vis (43) de l'unité d'injection (40).

2. Machine de moulage par injection (20), comprenant :
une unité d'injection (40) qui verse un matériau de moulage dans un moule (11) ; et
une unité de dosage de matière brute (50) selon la revendication 1,
dans laquelle l'unité d'injection (40) inclut un cylindre (41) qui chauffe le matériau de moulage et une vis (43) qui est agencée pour pouvoir tourner et se déplacer en va-et-vient dans le cylindre (41).

3. Machine de moulage par injection (20) selon la revendication 2, dans laquelle
l'unité de dosage de matière brute (50) inclut une partie de fusion (53) où la pluralité de types de matières brutes dosées par la pluralité de parties de dosage de matière brute (51, 52) fusionne.

4. Machine de moulage par injection selon la revendication 3, dans laquelle
la partie de fusion (53) est agencée au-dessus d'un orifice d'alimentation en matériau de moulage (45) qui est formé sur le cylindre (51) de l'unité d'injection.

5. Système de moulage par injection comprenant :
la machine de moulage par injection (20) selon l'une quelconque des revendications 2-4 ; et
un broyeur (80) qui broie des déchets non souhaités inclus dans un produit de moulage formé sur le moule ;
dans lequel l'unité de dosage de matières brutes (50) est configurée pour doser un matériau vierge et un matériau recyclé, qui est fabriqué par le broyeur (80) broyant les déchets non souhaités.
